(19) Europäisches Patentamt
European Patent Office
Office européen des brevets

(11) **EP 3 200 440 A1**

(12) **EUROPEAN PATENT APPLICATION**

(43) Date of publication:
**02.08.2017 Bulletin 2017/31**

(51) Int Cl.:
***H04N 1/40*** *(2006.01)*

(21) Application number: **17152990.2**

(22) Date of filing: **25.01.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **28.01.2016 JP 2016014801**<br>**20.12.2016 JP 2016246697** | (71) Applicant: **Funai Electric Co., Ltd.**<br>**Daito,**<br>**Osaka, 574-0013 (JP)**<br><br>(72) Inventors:<br>• **TOSHIHIRO, Shunsaku**<br>**Daito, Osaka 574-0013 (JP)**<br>• **NAKASE, Masakazu**<br>**Daito, Osaka 574-0013 (JP)**<br><br>(74) Representative: **Becker Kurig Straus**<br>**Patentanwälte**<br>**Bavariastrasse 7**<br>**80336 München (DE)** |

(54) **IMAGE FORMING DEVICE**

(57)     The invention provides an image forming device (10), which can generate a multi-valued image based on a binary image. An image forming device (10) includes: an image acquisition part (110) for acquiring a binary image; and a multi-valued image generation part (120) generating a multi-valued image including a specific pixel based on pixel values of pixels within a first image region with a first size including the specific pixel and pixel values of pixels within a second image region with a second size different from the first size including the specific pixel in the binary image.

FIG. 3

**Description**

BACKGROUND OF THE INVENTION

1. Field of the Invention

The invention relates to an image forming device which includes printing functions for forming images by utilizing an electronic photograph technology, an inkjet method, etc., and more particularly, to an image process technology used before printing.

2. Description of Related Art

Image forming devices can perform an image processing on a printing image (i.e., an image received for printing) inputted from portable terminals (e.g., smart phones), personal computers (PC) or the like and prints the same on the paper. The image processing herein may be, for example, an image processing based on a multi-valued image, including an image sharpening (e.g., an image edge enhancement), a density adjustment (e.g., the so-called tone curve correction, etc.). In addition to a multi-valued image represented by 256 gray levels in gray scale (the so-called density gray scale images), a binary image using only two gray levels of white and black and representing a density of color by balancing white and black areas (the so-called area gray scale image) may also be used as the printing image. Although the image processing may be appropriately performed when the multi-valued image is inputted to the image forming devices, the image processing does not effectively functions in case of the binary image being inputted and thus fails to obtain a desirable result.
In the past, the image forming devices are well-known for the technique of converting the binary image into the multi-valued image (e.g., Patent Document 1).

Prior Art Document

Patent Document

Patent Document 1: Japanese Patent Publication No. 2012-105065.

SUMMARY OF THE INVENTION

In prior art, the binary image generated by various approaches using portable terminals, PC, etc., and imputable to the image forming device cannot always be successfully converted into a suitable multi-valued image. The technique of Patent Document 1 is based on a binary image obtained using a dither method, and is therefore unable to properly change the binary image obtained by using other approaches (e.g., an error diffusion method) into the multi-valued image.
Accordingly, the invention aims to provide an image forming device capable of generating the multi-valued image based on the binary image without depending on a specific binarization approach.
An image forming device according to an embodiment of the invention includes: an acquisition part, acquiring a binary image; and a generation part, generating a multi-valued image including a specific pixel based on pixel values of pixels of the binary image within a first image region with a first size including the specific pixel and pixel values of pixels of the binary image within a second image region with a second size different from the first size including the specific pixel. In addition, said image is a 2D image generated by each of pixels in two dimensional configuration.
According to this configuration, the multi-valued image may be properly generated based on the binary image regardless of how the inputted binary image is generated. Thus, the image processing (e.g., sharpening, density adjustment, etc.) may be effectively performed on the generated multi-valued image so the image forming device can appropriately print images.
For example, the generation part generates the multi-valued image including the specific pixel according to a first pixel element value based on the pixel value of each of the pixels within the first image region and a second pixel element value based on the pixel value of each of the pixels within the second image region.
Thus, with respect to the specific pixel in the binary image, the value of the pixel within the image region with a certain size including the specific pixel can be multi-valued to thereby generate the multi-valued image including the specific pixel. Further, a result of the multi-valued process may be used to generate the suitable multi-valued image corresponding to the binary image. The first pixel element value and the second pixel element value based on the respective pixels within the image regions having multiple sizes (the first image region and the second image region) in the result of the multi-valued process.
Further, as an example, numbers of the pixels included in the first image region and the second image region may also be different.

In this way, the multi-valued image may also be properly generated based on the pixel values within the image regions having the different numbers of the pixels.

Further, as an example, the first image region and the second image region may also be similar shapes.

In this way, each of the image regions may be specified by using a relatively simple process so as to effectively generate the multi-valued image based on the binary image.

Further, as an example, the first image region includes a plurality of pixels in a square matrix having P rows and P columns and centering on the specific pixel in the binary image, where P is an odd number greater than or equal to three. The second image region includes a plurality of pixels in a square matrix having Q rows and Q columns and centering on the specific pixel in the binary image, where Q is an odd number greater than or equal to three and different from P. Further, the first image region and the second image region may also be regions centering on the specific pixel and symmetrical on and up, down, left and right sides.

In this way, for each pixel, the image region centering on the pixel may be used in the multi-valued process for the pixel to generate a more suitable multi-valued image.

Further, as an example, the generation part can also determine the pixel value of the specific pixel based on a linear sum of the first pixel element value and the second pixel element value.

In this way, the multi-valued image may be effectively generated by using the linear sum in calculation.

Further, as an example, the first pixel element value reflects a ratio of the pixels having a pixel value to all the pixels within the first image region, and the second pixel element value reflects a ratio of the pixels having a pixel value to all the pixels within the second image region.

In this way, the proper multi-valued image corresponding to the ratio of one pixel in the binary image may be generated.

Further, as an example, the first pixel element value reflects a product of the ratio of the first image region and a predetermined value, and the second pixel element value reflects a product of the ratio of the second image region and the predetermined value.

In this way, the multi-valued image may be generated to include the pixel value set as a maximum value acquirable for the predetermined value, for example.

Further, as an example, the generation part can determine the pixel value of the specific pixel based on a linear combination of the first pixel element value, the second pixel element value and predetermined parameters.

In this way, a weight (coefficient) of each of the first pixel element value and the second pixel element value may be adjusted by using the predetermined parameter so the pixel value of the pixel (the specific pixel) in the multi-valued image may be appropriately determined.

Further, as an example, the predetermined parameters may also be determined based on a multiple regression analysis.

In this way, the weight of each of the first pixel element value and the second pixel element value may be appropriately determined by using the multiple regression analysis based on actual situation.

Further, as an example, the determined parameters include a coefficient for the first pixel element value of the first image region and a coefficient for the second pixel element value of the second image region, and each of the coefficients is determined by taking a smaller value when the size of the image region corresponding to the coefficient is greater.

In this way, influences caused by the pixel value of the pixel relatively distant from the specific pixel in the binary image may be correspondingly suppressed and the pixel value of multi values of the specific pixel may be determined.

Further, as an example, the generation part can also determine the pixel value of the specific pixel based on an average value of the first pixel element value and the second pixel element value.

In this way, because a relatively simple averaging calculation is used, the pixel value of the specific pixel in the multi-valued image may be effectively determined.

Also, in addition to the binary image, for example the image with relative low gray levels (e.g. 4 gray levels) possibly cannot obtain a proper result even if the relative low gray levels is applied with the same image processing (e.g., sharpening, density adjustment, etc.) used for the binary image. In this case, what can be done is to convert the image represented by a lower number of gray levels (also known as a low gray level image) into image represented by a higher number of gray levels (also known as a high gray level image). To do so, an image forming device according to an embodiment of the invention includes: an acquisition part, acquiring an M-valued image, wherein M is a natural number greater than or equal to two, and each pixel value of each pixel in the M-valued image is represented by one of M values; and a generation part, generating an N-valued image including a specific pixel based on the pixel values of the pixels of the M-valued image within a first image region with a first size including the specific pixel and the pixel values of the pixels of the M-valued image within a second image region with a second size different from the first size including the specific pixel, and representing the specific pixel by one of N values, wherein N is a natural number greater than M.

According to this configuration, regardless of how the low gray level image (the M-valued image) is generated, the high gray level image (the N-valued image) may be properly generated based on the low gray level image. In this way, the image processing may be performed on the generated high gray level image (i.e., the multi-valued image) more effectively so the image forming device can print images more appropriately.

In the image forming device, each of the pixel values of each of the pixels in the M-valued image is represented by one of M different numbers, and each of the pixel value of each of the pixels in the N-valued image is represented by one of N different numbers.

The pixel value of the specific pixel is a multi-valued pixel value represented by one of multiple numbers greater than or equal to N, and the pixel value reflects a first pixel element value based on the pixel values of each of the pixels within the first image region and a second pixel element value based on the pixel values of each of the pixels within the second image region.

The image forming device according to the embodiments of the invention can properly convert the binary image generated by various approaches into the multi-valued image. As a result, the printing applied with appropriate image processing may be realized.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram of an image forming device in Embodiment 1.
FIG. 2 is a functional block diagram for converting the binary image into the multi-valued image by the image forming device.
FIG. 3 is a functional block diagram showing detailed configuration of a multi-valued image generation part in the image forming device.
FIG. 4 is a flowchart showing a multi-valued image generating process of the image forming device.
FIG. 5 is a diagram illustrating a first image region centering on a focused pixel in the binary image.
FIG. 6 is a diagram illustrating a second image region centering on the focused pixel in the binary image.
FIG. 7 is a diagram showing relations between the first pixel element value, the second pixel element value and the multi-valued image calculated for each pixel in the binary image.
FIG. 8 is a diagram showing contents of the images when the multi-valued image is generated by the multi-valued image generation part based on the binary image acquired by an image acquisition part of the image forming device.
FIG. 9 is a flowchart showing a multi-valued image generating process in Embodiment 2.
FIG. 10 is a diagram illustrating a circular image region centering on the focused pixel of the binary image and having a size of 5.
FIG. 11 is a diagram illustrating a circular image region centering on the focused pixel of the binary image and having a size of 13.
FIG. 12 is a diagram illustrating a circular image region centering on the focused pixel of the binary image and having a size of 21.
FIG. 13 shows a relation between the multi-valued image generated by the image forming device based on the binary image and the multi-valued image which is a generation source of the binary image.

DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

The embodiments of the invention will be described below with reference to the accompanying drawings. Further, each of the embodiments described below represents one preferred embodiment of the invention. Values, shapes, materials, constituent elements, arranged positions and connection manners of the constituent elements, steps, and a sequence of the steps shown in the following embodiments are merely examples rather than limitations to the invention. The invention is defined by accompanied claims. Therefore, constituent elements not recited in independent claims among the constituent elements in embodiments are not required for achieving subject matters in the invention but are served as a descriptive content for accomplishing more preferable implementations.

In the following embodiment, an image forming device for properly converting the binary image generated and inputted by various approaches into the multi-valued image will be described. The so-called binary image refers to an image in which each pixel constituting the image is represented by one of two types of value. For example, the pixel can be represented by 0 or 1 in the case of one bit, and thus the binary image in this case becomes an image in which a value of each pixel is represented by one of two values (i.e., 0 or 1). The so-called multi-valued image, for example M-valued image, refers to an image in which each pixel constituting the image is represented by one of M values, such as 0, 1, 2 ... M-1. Of course other different M type of values can also be used, only if each pixel of the image is represented by one of M different values.

[Embodiment 1]

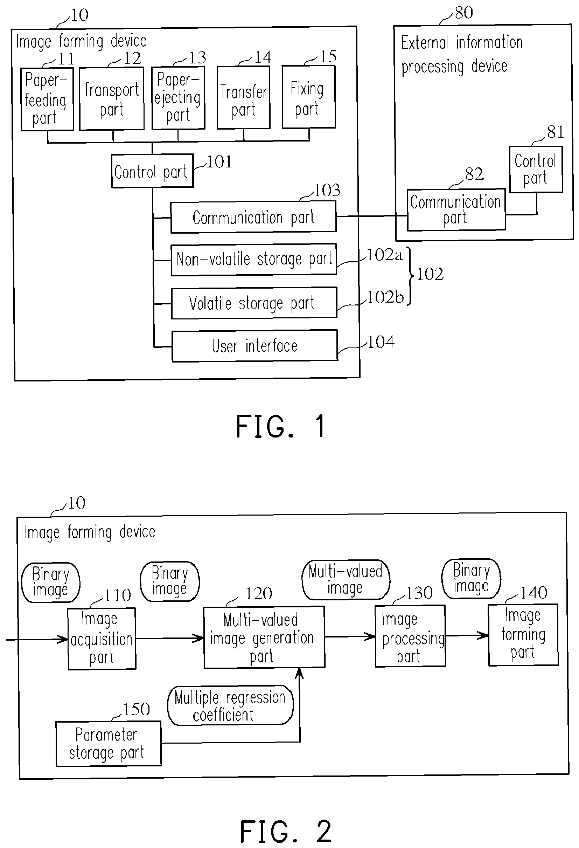

Hereinafter, an image forming device 10 in Embodiment 1 will be described with reference to FIG. 1 to FIG. 8.

[Configuration]

FIG. 1 shows an example of the configuration of the image forming device 10.

The image forming device 10 may be printers or MFP (Multi Function Product/printer/peripheral) (hereinafter, description is provided using a laser printer) having a printing function for generating images by utilizing an electronic photograph technology. The image forming device 10 may also include functions for generating images by a method other than utilizing the electronic photograph technology (e.g., the inkjet method). FIG. 1 further illustrates an information processing device (external information processing device) 80 as an external part for inputting the printing image to the image forming device 10.

As shown in FIG. 1, the image forming device 10 includes a paper-feeding part 11, a transport part 12, a paper-ejecting part 13, a transfer part 14, a fixing part 15, a control part 101, a storage part 102, a communication part 103 and a user interface 104 including LCD (Liquid Crystal Display) and the like. In the image forming device 10, the control part 101 controls the paper-feeding part 11, the transportation part 12, the paper-ejecting part 13, the transfer part 14, the fixing part 15 and performs a printing process on the exclusive paper. The control part 101 can control a feeding roller of the paper-feeding part 11 to fetch the paper from a cassette. Then, after the transfer part 14 transfers a latent image formed by a toner applied to a photoreceptor (an image carrier) on the paper, the paper is transported to the fixing part 15 for fixing the toner on the paper and ejected from a paper-ejecting tray of the paper-ejecting part 13. The control part 101 then moves the paper by controlling a roller group (a transportation roller, the photoreceptor (the image carrier), a transfer roller, a fixing roller, a pressing roller, a paper-ejecting roller, etc.) of the transportation part 12 located respective position on a transportation path. Further, LCD of the user interface 104 is controlled by the control part 101 to display printing errors caused by jammed paper, for example.

The control part 101 includes a processor (a microprocessor). The control part 101 has functions for controlling each part (the paper-feeding part 11, the transportation part 12, the paper-ejecting part 13, the transfer part 14, the fixing part 15, the communication part 103, the user interface 104, etc.) of the image forming device 10. Said functions are realized by the control part 101 executing a control program (control process) stored in the storage part 102, such as a memory. The control part 101 can generate a to-be printed image according to the printing image inputted to the image forming device 10 from the external information processing device 80 so the graph on the image may be transferred to the paper by the transfer part 14. Further, the external information processing device 80 inputs the printing image to the image forming device 10 via a communication part 82 by using a control part 81 (i.e., a processor).

If the printing image inputted from the external information processing device 80 is the multi-valued image (e.g., a gray scale image of 256 gray levels), the control part 101 can perform the image processing (e.g., sharpening, tone curve adjustment or other image processing) to generate the to-be-printed image. Further, if the printing image inputted from the external information processing device 80 is the binary image, the control part 101 can perform the image processing to generate the to-be-printed image after converting the binary image into the multi-valued image. According to the graphic on the to-be-printed image, the transfer part 14 uses a light emission from a light source to change a potential of the photoreceptor. Then, the transfer roller charged by applying a reverse voltage of the photoreceptor is used to move the latent image, which is represented by the toner attached on the photoreceptor due to static electricity, to the paper in order to complete the transfer. Further, if the image forming device 10 is an ink jet printer, to-be-printed data is divided into a plurality of swathes to be transmitted to ink jet head for printing so the ink jet head can inject tiny droplets onto the paper by sliding in left and right directions.

The storage part 102 includes a non-volatile storage part 102a such as ROM (Read Only Memory) for preserving programs (e.g., the control program) and data, and a volatile storage part 102b such as RAM (Random Access Memory) used as a temporarily storage when the program is to be executed. The communication part 103 receives the printing image from the external information processing device 80, such as portable terminals (smart phones) or PC (personal computers). The communication part 103 can receive the binary image (i.e., the printing image) generated by applications of smart phones or a printer driver of PC, which serve as the external information processing device 80, and sent from the communication part 82.

The image forming device 10 with the above configuration (hardware configuration) will be described below in terms of functionality. Hereinafter, the description is provided especially relating to the image forming device 10 for generating the multi-valued image based on the binary image.

FIG. 2 is a functional block diagram of the image forming device 10 regarding the image processing for converting the binary image into the multi-valued image. As shown in the drawing, in terms of functionality, the image forming device 10 comprises an image acquisition part 110, a multi-valued image generation part 120, an image processing part 130, an image forming part 140 and a parameter storage part 150.

The image acquisition part 110 is realized by executing the control part 101 executing the control program stored in the storage part 102 together with the communication part 103. The image acquisition part 110 can acquire a printing image, which is a binary image with pixel value of each pixel (a data value representing a density for each pixel) is represented by one of two values, sent from the external information device 80 (PC, etc.), and transmit the printing image to the multi-valued image generation part 120. Here, the printing image is a 2D image including pixel data groups, that is, an image formed by the pixels arranged on a 2D plane (typically, an image formed by the pixels arranged in a matrix). The pixel has a property including a density value of each color and a position of the pixel within the image (a 2D position coordinate). That is, pixel information includes property information, and the property information includes density information (the pixel value) of the pixel and position information (coordinates) of the pixel. Examples regarding the scenario (situation) where the binary image is used as the image to be inputted are provided as follows. For example, the situation may be: after a printed image is scanned into the binary image and retrieved by the external information device 80 (PC, etc.), users designate the binary image as the printing image to be inputted to the image forming device 10. As another example, in order to reduce a communication data amount from the external information processing device 80 to the image forming device 10 for accomplishing higher speed and reduction of network loadings until the printing is over, the external information processing device 80 converts the multi-valued image into the binary image and sends the binary image as the printing image to the image forming device 10. The binary image may be generated from the multi-valued image such as a gray scale image of multiple gray levels (e.g., 256 gray levels) by using a dither method, a density pattern method, an error diffusion method and the like. However, the binary image acquired by the image acquisition part 110 may be generated without going through the stage of the multi-valued image.

The multi-valued image generation part 120 is realized by the control part 101 executing the control program stored in the storage part 102. The multi-valued image generation part 120 can convert the binary image (i.e., the printing image) transmitted from the image acquisition part 110 into the multi-valued image (i.e., generating the multi-valued image based on the binary image and a multi-valued image generating parameter (coefficient)). The image processing part 130 is used to perform the image processing based on the multi-valued image-including the image sharpening such as the image edge enhancement, or the density adjustment such as the tone curve correction-on the multi-valued image generated by the multi-valued image generation part 120. As a result, the to-be-image is generated.

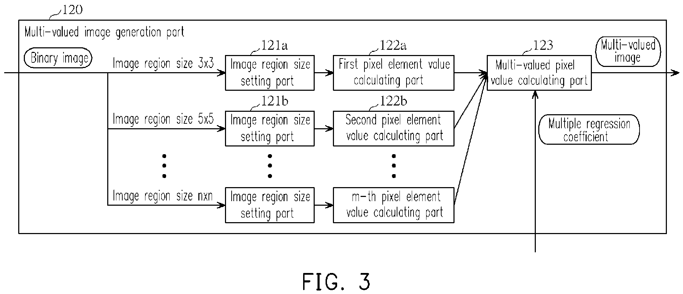

For each of the pixels in the binary image, the multi-valued image generation part 120 determines the pixel value representing the density of a specific pixel by one of three or more values based on the pixel value of each of the pixels within a first size image region (as a first image region) including the specific pixel and the pixel value of each of the pixels within a second size image region having a size different from the first size (as a second image region) including the specific pixel in the binary image. In this way, the multi-valued image generation part 120 can generate the multi-valued image having the pixel value (the density) of each of the pixels represented by one of the three or more values. Detailed configuration of the multi-valued image generation part 120 is illustrated in FIG. 3. FIG. 3 shows an example of the image regions of 3x3 pixels and 5x5 pixels being normalized into $n \times n$ pixels. An image region size setting part 121a, an image region setting part 121b and so forth can set the sizes of the image regions. A first pixel element value calculating part 122a, a second pixel element value calculating part 122b and so forth can calculate an $m^{th}$ pixel element value by multiplying a ratio of the pixels having the pixel value of 1 to all the pixels within the image regions of the set sizes in the binary image by a predetermined value s (e.g., 255). Here, m is any one of 1 to n. A multi-valued pixel value calculating part 123 can calculate a pixel value of multi values by using a linear combination of the $m^{th}$ pixel element value and the multi-valued image generating parameter (a multiple regression coefficient) obtained from the multiple regression analysis. Further, the predetermined value s is 255 when the pixel value of multi values is 8 bit, but the invention is not limited thereto. In other examples, the predetermined value s is 1023 in case of 10 bit, 4095 in case of 12 bit, and 65535 in case of 16 bit.

The image processing part 130 is realized by the control part 101 executing the control program stored in the storage part 102. The image processing part 130 can perform the image processing on the multi-valued image generated by the multi-valued image generation part 120 in order to generate the to-be-printed image.

The image forming part 140 is realized by the control part 101 executing the control program stored in the storage part 102 together with the paper-feeding part 11, the transportation part 12, the paper-ejecting part 13, the transfer part 14 and the fixing part15. When the to-be-printed image is generated by the image processing part 130, the image forming part 140 is controlled to complete transfer on the paper by using the to-be-printed image as a base latent image (i.e., the base latent image to be transferred to the paper in the transfer part 14).

The parameter storage part 150 is realized by an area in the storage part 102 and stored with the multi-valued image generating parameter (the multiple regression coefficient) obtained from the multiple regression analysis.

[Operations]

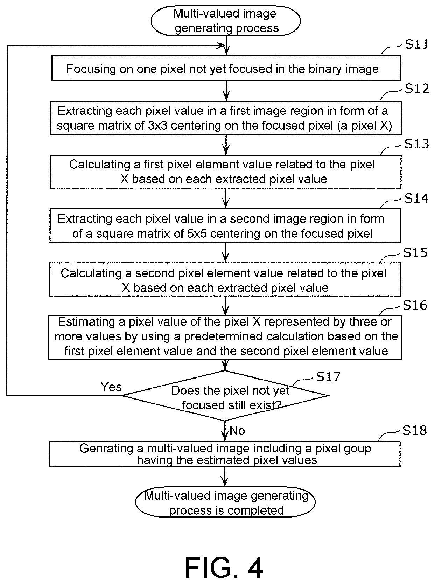

Specific operations for generating the multi-valued image based on the binary image by the multi-valued image generation part 120 of the image generation part 10 with the above configuration (the predetermined image processing related to generation of the multi-valued image, i.e., a multi-valued image generating process) will be described according to FIG. 4 as follows. FIG. 4 is a flowchart showing a multi-valued image generating process of the image forming device 10. The multi-valued image generating process is performed by the control part (processor) 101 executing the control program in the storage part 102.

For focusing the pixels in the binary image one by one when the multi-valued image generation part 120 of the image forming device 10 acquires the binary image from the image acquisition part 110, first of all, one pixel not yet focused is focused (step S11). Here, focusing on the pixels refers to determining the specific pixel and considering the specific pixel as a processing target. The specific pixel is also known as a focused pixel. Among the 2D image having a set of pixels arranged in an xy 2D coordinate space (the binary image), the pixel focused in step S11 is set as a pixel X (i, j). Here, i is an x coordinate and j is a y coordinate.

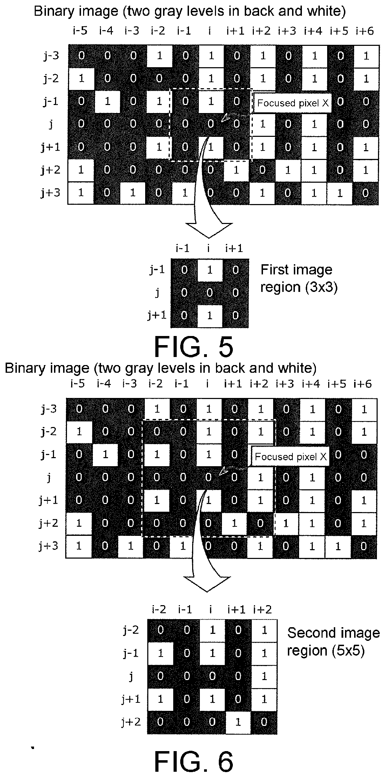

The multi-valued image generation part 120 extracts the pixel value of each of the pixels within a first image region in form of a 3x3 square matrix (an image region including 9 pixels) centering on the focused pixel (the pixel X) (step S12). Here, when a number of pixels is used to indicate the size, the size of the first image region is 9. FIG. 5 is a diagram illustrating a first image region centering on a focused pixel (i.e., the specific pixel serving as the processing target) in the binary image. The pixels within the first image region illustrated in the drawing are, for example, pixels located at coordinates (i-1, j-1), (i, j-1), (i+1, j-1), (i-1, j), (i, j), (i+1, j), (i-1, j+1), (i, j+1) and (i+1, j+1). The pixel value of each of the pixels is 1 or 0 within the first image region having the number of pixels being 3 pixels in a horizontal direction$\times$3 pixels in a vertical direction.

Based on each of the pixel values (the density information represented by one of two values) of each of the pixels within the first image region extracted in step S12, the multi-valued image generation part 120 calculates a first pixel element value related to the pixel X (i, j) (step S13). The first pixel element value may be used for estimating the pixel value of multi values related to the pixel X in subsequent step S16. The first pixel element value is a value (herein, referring to a value within a range from 0 to the predetermined value s) calculated by multiplying a ratio r1 of the pixel having the pixel value of two values being 1 to all (9 of) the pixels within the first image region by the predetermined value s (e.g., 255) for a maximum value of multi values. If the predetermined value s is set to be 255, the ratio r1 is 2/9 according to the first image region illustrated in FIG. 5, and thus the first pixel element value related to the pixel X (i, j) at the center may be calculated by: the ratio r1$\times$the predetermined value s=(2/9)$\times$255, which is 57.

Further, the multi-valued image generation part 120 extracts the pixel value of each of pixels within the second image region in form of a 5x5 square matrix (an image region including 25 pixels) centering on the focused pixel (the pixel X) (step S14). Here, when the number of pixels is used to indicate the size, the size of the second image region is 25. FIG. 6 is a diagram illustrating a second image region centering on the focused pixel in the binary image. The pixels within the second image region illustrated in the drawing are, for example, pixels located at coordinates (i-2, j-2), (i-1, j-2), (i, j-2), (i+1, j-2), (i+2, j-2), (i-2, j-1), (i-1, j-1), (i, j-1), (i+1, j-1), (i+2, j-1), (i-2, j), (i-1, j), (i, j), (i+1, j), (i+2, j), (i-2, j+1), (i-1, j+1), (i, j+1), (i+1, j+1), (i+2, j+1), (i-2, j+2), (i-1, j+2), (i, j+2), (i+1, j+2), and (i+2, j+2). The pixel value of each of the pixels is 1 or 0 within the second image region having the number of pixels being 5 pixels in the horizontal direction$\times$5 pixels in the vertical direction.

Based on each of the pixel values (the density information represented by one of two values) of each of the pixels within the second image region extracted in step S14, the multi-valued image generation part 120 calculates a second pixel element value related to the pixel X (i, j) (step S15). The second pixel element value may be used for estimating the pixel value of multi values related to the pixel X in subsequent step S16. The second pixel element value is a value (herein, referring to a value within a range from 0 to the predetermined value s) calculated by multiplying a ratio r2 of the pixel having the pixel value of two values being 1 to all (25-of) the pixels within the second image region by the predetermined value s (e.g., 255). If the predetermined value s is set to be 255, according to the second image region illustrated in FIG. 6, the second pixel element value related to the pixel X (i, j) at the center may be calculated by: the ratio r2$\times$the predetermined value s=(10/25)$\times$255, which is 102.

In addition, a ratio r normalized from the ratios r1 and r2 may be calculated by using Equation 1 below.

$$r=z/w\ldots(\text{Equation } 1)$$

Herein, z is the number of pixels having the pixel value being 1 within the image regions of the binary image and w is a size of the image regions (i.e., a total number of pixels within the image regions).

Next, based on the first pixel element value and the second pixel element value obtained in step S13 and step S15, the multi-valued image generation part 120 estimates a pixel value Y of multi values related to the pixel X (i, j) by using a predetermined calculation determined in advance (step S16). The predetermined calculation is a calculation of a linear sum. For example, the calculation is used for calculating an average of the first pixel element value and the second pixel element value. If a third pixel element value is additionally used with the first pixel element value and the second pixel element value in similar manner, the pixel value Y of multi values is estimated by using Equation 2 below.

$$Y = k1 \times \alpha + k2 \times \beta + k3 \times \gamma \ldots \text{(Equation 2)}$$

Herein, k1 is the first pixel element value, k2 is the second pixel element value, k3 is the third pixel element value, each of a coefficient $\alpha$, a coefficient $\beta$ and a coefficient $\gamma$ is "a weight" which refers to a coefficient for indicating whether to set up the weight to any one of the first, the second and the third pixel element values, where $\alpha + \beta + \gamma = 1$. The multi-valued image generation part 120 stores the pixel value Y estimated in step S16 into the storage part 102, and repeats the process of step S11 to step S16 so long as the pixel not yet focused still exists in the binary image (step S17) Then, the multi-valued image generation part 120 generates a multi-valued image including a pixel group after all the pixels in the binary image are focused (step S18), and then completes the multi-valued image generating process. The pixel group includes the pixel value Y of multi values estimated for each of the pixels as the density information (the pixel value).

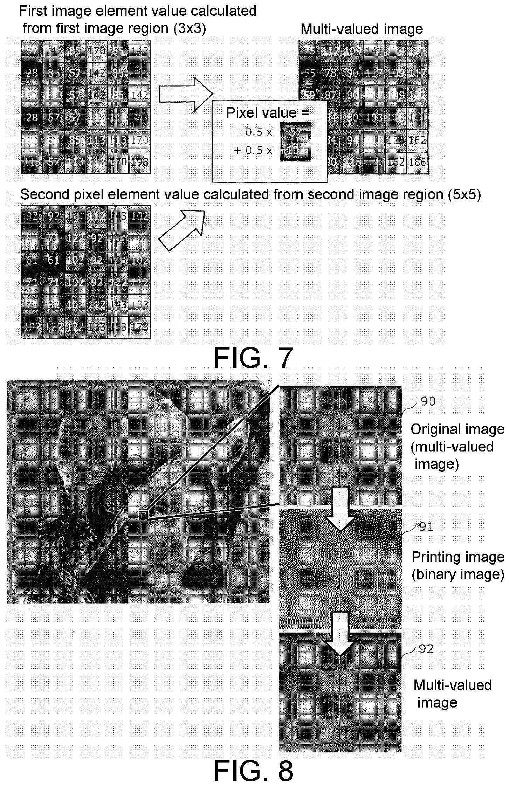

After going through image processing performed by the image processing part 130, the multi-valued image generated in step S18 is used by the image generation part 140 to form the latent image to be transferred to the paper by the transfer part 14. FIG. 7 is a diagram showing relations between the first pixel element value related to each pixel and calculated in step S13, the second pixel element value related to each pixel and calculated in step S15 and the multi-valued image related to each pixel and generated in step S18. In FIG. 7, as an example, the pixel value Y of each of the pixels in the multi-valued image is calculated by setting the coefficient $\alpha$ and the coefficient $\beta$ in Equation 2 to be 0.5 according to the first pixel element value and the second pixel element value without using the third pixel element value. In addition, for the pixels on top, bottom, left and right portions of the image, since the numbers of the pixels included in the first image region and the second image region centering on the pixel are relatively less compared to the others, in order to calculate the pixel value within the image region in the case where the size of the image region is 5X5, the binary image may be expanded by units of two pixels on the up, bottom, left and right portions by any means in advance, for example.

[Examples for generating the multi-valued image]

FIG. 8 is a diagram showing partial contents of the images when the multi-valued image is generated by the multi-valued image generation part 120 based on the binary image acquired by the image acquisition part 110 of the image forming device 10 using the multi-valued image generating process. Furthermore, a multi-valued image (i.e., an original image 90) as the basis for generating a binary image 91 acquired by the image acquisition part 110 is also provided in said drawing. The original image 90 is not provided to the image forming device 10. As shown in the drawing, in a multi-valued image 92 generated by the multi-valued image generation part 120 based on the binary image 91, intermediate gray levels lost during binarization of the original image 90 are restored. Further, "the intermediate gray levels" refer to gray levels with intermediate brightness between high light (i.e., the gray levels close to "255") and shadow (i.e., the gray levels close to "0") of the image.

In this way, the image forming device 10 can properly convert the acquired binary image into the multi-valued image without acquiring related information (e.g., a look up table (LUT), etc.) for generating the binary image as the printing image by the image acquisition part 110.

[Embodiment 2]

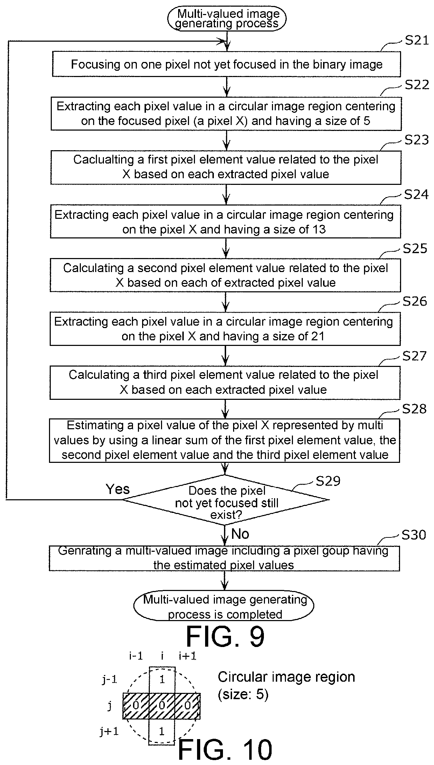

Hereinafter, an embodiment in which a part of the image forming apparatus 10 is modified will be described. The modified image forming device 10 in Embodiment 2 is configured similar to the image forming device 10 in Embodiment 1, and has the constituent elements indicated by the same reference number of Embodiment 1. However, content of the multi-valued image generating process (i.e., content of the control program stored in the storage part 102) performed by the multi-valued image generation part 120 is different in Embodiment 2. Here, the multi-valued image generating process of the image forming device 10 in Embodiment 2 will be described according to FIG. 9. FIG. 9 is a flowchart showing a multi-valued image generating process in Embodiment 2. The multi-valued image generating process are performed by the control part 101 executing the control program in the storage part 102.

For focusing the pixels in the binary image one by one when the multi-valued image generation part 120 of the image forming device 10 acquires the binary image from the image acquisition part 110 in Embodiment 2, first of all, one pixel not yet focused is focused (step S21). Among the 2D image having a set of pixels arranged in an xy 2D coordinate space (the binary image), the pixel focused in step S21 is set as a pixel X (i, j). Here, i is an x coordinate and j is a y coordinate.

The multi-valued image generation part 120 extracts the pixel value of each of the pixels within a circular image region from the circular image region in form of a circle centering on the focused pixel (the pixel X) and having a size of 5 (i.e., the number of pixels included in the circular image region is 5) (step S22). FIG. 10 is a diagram illustrating a circular image region centering on the focused pixel of the binary image and having a size of 5. The pixels within the circular image region illustrated in the drawing are, for example, pixels located at coordinates (i, j-1),(i-1,j), (i,j), (i+1, j) and (i, j+1). The pixel value of each of said pixels is 1 or 0.

Based on each of the pixel values (the density information represented by one of two values) of each of the pixels within the circular image region having the size of 5 extracted in step S22, the multi-valued image generation part 120 calculates a first pixel element value related to the pixel X (i, j) (step S23). The first pixel element value may be used for estimating the pixel value of multi values related to the pixel X in subsequent step S28. The first pixel element value is a value (here, referring to a value within a range from 0 to the predetermined value s) calculated by multiplying a ratio r1 of the pixel having the pixel value of two values being 1 to all (5-of) the pixels within the circular image region by the predetermined value s for determining a maximum value of multi values (e.g., 255). If the predetermined value s is set to be 255, the ratio r1 is 2/5 according to the circular image region having the size of 5 illustrated in FIG. 10, and thus the first pixel element value related to the pixel X (i, j) may be calculated by: the ratio r1×the predetermined value s=(2/5)×255, which is 102 (referring to Equation 1). Further, the predetermined value s is 255 when the pixel value of multi values is 8 bit, but the invention is not limited thereto. In other examples, the predetermined value s is 1023 in case of 10 bit, 4095 in case of 12 bit, and 65535 in case of 16 bit.

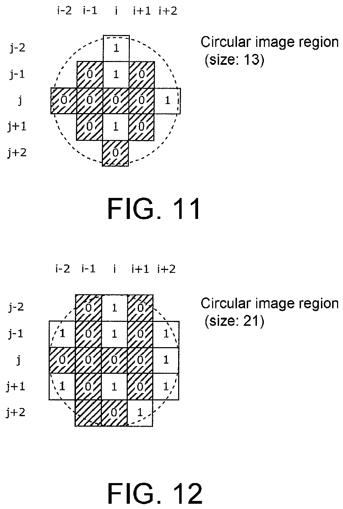

Further, the multi-valued image generation part 120 extracts the pixel value of each of the pixels within a circular image region from the circular image region in form of a circle centering on the focused pixel (the pixel X) and having a size of 13 (i.e., the number of pixels included in the circular image region is 13) (step S24). FIG. 11 is a diagram illustrating a circular image region centering on the focused pixel of the binary image and having a size of 13. The pixels within the circular image region illustrated in the drawing are pixels located at coordinates (i, j-2), (i-1, j-1), (i, j-1), (i+1, j-1), (i-2, j), (i-1, j), (i, j), (i+1, j), (i+2, j), (i-1, j+1), (i, j+1), (i+1, j+1), and (i, j+2). The pixel value of each of said pixels is 1 or 0.

Based on each of the pixel value (the density information represented by one of two values) of each of the pixels within the circular image region having the size of 13 extracted in step S24, the multi-valued image generation part 120 calculates a second pixel element value related to the pixel X (i, j) (step S25). The second pixel element value may be used for estimating the pixel value of multi values related to the pixel X in subsequent step S28. The second pixel element value is a value (here, referring to a value within a range from 0 to the predetermined value s) calculated by multiplying a ratio r2 of the pixel having the pixel value of two values being 1 to all (13-of) the pixels within the circular image region by the predetermined value s (e.g., 255). If the predetermined value s is set to be 255, according to the circular image region having the size of 13 illustrated in FIG. 11, the second pixel element value related to the pixel X (i, j) may be calculated by: the ratio r2×the predetermined value s=(4/13)×255, which is 78 (referring to Equation 1).

Further, the multi-valued image generation part 120 extracts the pixel value of each of the pixels within a circular image region from the circular image region in form of a circle centering on the focused pixel (the pixel X) and having a size of 21 (i.e., the number of pixels included in the circular image region is 21) (step S26). FIG. 12 is a diagram illustrating a circular image region centering on the focused pixel of the binary image and having a size of 21. The pixels within the second image region illustrated in the drawing are, for example, pixels located at coordinates (i-1, j-2), (i, j-2), (i+1, j-2), (i-2, j-1), (i-1, j-1), (i, j-1), (i+1, j-1), (i+2, j-1), (i-2, j), (i-1, j), (i, j), (i+1, j), (i+2, j), (i-2, j+1), (i-1, j+1), (i, j+1), (i+1, j+1), (i+2, j+1), (i-1, j+2), (i, j+2), and (i+1, j+2). The pixel value of each of said pixels is 1 or 0.

Based on each of the pixel value (the density information represented by one of two values) of each of the pixels within the circular image region having the size of 21 extracted in step S26, the multi-valued image generation part 120 calculates a third pixel element value related to the pixel X (i, j) (step S27). The third pixel element value may be used for estimating the pixel value of multi values related to the pixel X in subsequent step S28. The third pixel element value is a value (here, referring a value within a range from 0 to the predetermined value s) calculated by multiplying a ratio r3 of the pixel having the pixel value of two values being 1 to all (21-of) the pixels within the circular image region by the predetermined value s (e.g., 255). If the predetermined value s is set to be 255, according to the circular image region having the size of 21 illustrated in FIG. 12, the third pixel element value related to the pixel X (i, j) may be calculated by: the ratio r3×the predetermined value s=(9/21)×255, which is 109 (referring to Equation 1).

Next, based on the first pixel element value, the second pixel element value and the third pixel element value calculated in step S23, step S25 and step S27, the multi-valued image generation part 120 estimates a pixel value Y of multi values related to the pixel X (i, j) by using a predetermined calculation determined in advance (step S28). Here, the predetermined calculation refers to use of a multiple regression in calculation, and the pixel value Y of multi values is estimated by using Equation 3 below.

$$Y=k1\times\alpha+k2\times\beta+k3\times\gamma+\delta \text{ ($\delta$: the constant term) (Equation 3)}$$

Here, k1 is the first pixel element value; k2 is the second pixel element value; k3 is the third pixel element value; and $\alpha$, $\beta$ and $\gamma$ are coefficients corresponding to each term (the calculated pixel element values from each of the image regions) of a linear sum, which are values predetermined by using the multiple regression analysis. An example for setting a weight on each term of the linear sum for a weighted average may be set as follows: the coefficient $\alpha$=0.5; the coefficient $\beta$=0.3; the coefficient $\gamma$=0.2. In this case, what can be done is to determine each of the coefficients by taking a smaller value when the size of the image region corresponding to the coefficient is greater according to content of the binary image. Further, for each of the pixels (the focused pixels) in the binary image, when the multi-valued image generation part 120 is to determine the pixel value representing the density of the pixel by one of three or more values based on the pixel value of each of the pixels within the first image region in form of a 3$\times$3 square matrix including the focused pixel and having the size of 9, the pixel value of each of the pixels within the second image region in form of a 5$\times$5 square matrix including the focused pixel and having the size of 25 and the pixel value of each of the pixels within the third image region in form of 7$\times$7 square matrix including the focused pixel and having the size of 49 in the binary image, one example of the coefficients and the constant in Equation 3 is provided as follows. The coefficient $\alpha$=0.27; the coefficient $\beta$=0.59; coefficient $\gamma$=0.12; and the constant $\delta$=-1.56.

The multi-valued image generation part 120 stores the pixel value Y estimated in step S28 into the storage part 102, and repeats the process of step S21 to step S28 so long as the pixel not yet focused still exists in the binary image (step S29). Then, the multi-valued image generation part 120 generates a multi-valued image including a pixel group after all the pixels in the binary image are focused (step S30), and then completes the multi-valued image generating process. The pixel group includes the pixel value Y of multi values estimated for each of the pixels as the density information (the pixel value).

As such, for each pixel of the binary image, the multi-valued image generation part 120 can calculate the pixel element value representing the pixel value (the density information) of the focused pixel for each of the image regions based on the pixel value (the density information) of each of the pixels within each of the image regions including the focused pixel having the sizes different from one another. Then, the multi-valued image may be generated by estimating the linear sum of a plurality of the calculated pixel element values from the image regions as the pixel value of the focused pixel. The generated multi-valued image is transmitted to the image processing part 130 so the image processing (the image processing based on the multi-valued image) may be properly performed on the multi-valued image.

[Embodiment 3]

Hereinafter, an embodiment in which a part of the image forming apparatus 10 in Embodiment 1 is modified will be described. The modified image forming device 10 in Embodiment 3 is configured similar to the image forming device 10 in Embodiment 1, and has each of the constituent elements indicated by the same reference number of Embodiment 1. However, content of the predetermined calculation of step S16 in the multi-valued image generating process performed by the multi-valued image generation part 120 is different in Embodiment 3. That is to say, the calculation shown by Equation 2 is used as the predetermined calculation instead. In Embodiment 3, the coefficient $\alpha$, the coefficient $\beta$ and the coefficient $\gamma$ are determined as follows.

The external information processing device 80 (PC, etc.) generates a plurality of binary images by, for example, performing binarization by various approaches, such as the error diffusion method, on multi-valued images (original images) such as a plurality of 256 gray level gray scale images. Then, the multi-valued images may be calculated by performing a multi-valued process by using the same process sequence in the multi-valued image generating process shown in FIG. 4 with the coefficient $\alpha$, the coefficient $\beta$, the coefficient $\gamma$ and the constant $\delta$ as variables for each of the binary images. Then, values of the coefficient $\alpha$, the coefficient $\beta$ and the coefficient $\gamma$ are specified by minimizing a difference of the multi-valued images and the original images. The coefficient $\alpha$, the coefficient $\beta$ and the coefficient $\gamma$ and the constant $\delta$ specified in such way are stored in the parameter storage part 150 (an area of the storage part 102) of the image forming device 10. This storing process may be performed in a production phase of the image forming device 10 or performed in an operational phase of the image forming device 10 by using a program update or the like. In this way, the image forming device 10 can perform the multi-valued image generating process shown in FIG. 4 by using the coefficient $\alpha$, the coefficient $\beta$ and the coefficient $\gamma$ and the constant $\delta$ together with Equation 3.

In addition, the method for determining the coefficient $\alpha$, the coefficient $\beta$ and the coefficient $\gamma$ and the constant $\delta$ may use analysis methods, such as the multiple regression analysis, or a machine learning method.

[Embodiment 4]

Hereinafter, an embodiment in which a part of the image forming apparatus 10 in Embodiment 1 is modified will be described. The modified image forming device 10 in Embodiment 4 is configured similar to the image forming device 10 in Embodiment 1, and has the constituent elements indicated by the same reference number of Embodiment 1. However, the image forming device 10 in Embodiment 4 does not generate the multi-valued image based on the binary image but receives an image (an M-valued image) represented by M values (where M is a natural number), such as two values to four values, with a relatively low gray level as the printing image. Then, an image (an N-valued image) represented by N values (where N is a natural number greater than M, such as 256) with a relatively high gray level than M values is generated. Here, the image processing part 130 can obtain a suitable result more easily by performing the image process (e.g., sharpening, tone curve adjustment, etc.) on the N-valued image with the high gray level as compared to the M-valued image with the low gray level.

The multi-valued image generating process performed by the multi-valued image generation part 120 of the image forming device 10 in Embodiment 4 is identical to the process shown in FIG. 4. However, in step S11, pixels of the M-valued image are focused instead of the pixels of the binary image. A pixel value of the pixel of the M-valued is an integer value greater than or equal to 0 and less than M. Further, in step S13, the first pixel element value is calculated by multiplying a ratio r1 obtained from a sum of the pixel values of all (9-of) the pixels within the first image region divided by a maximum value (i.e., M-1) among the pixel values of the M values×the number of pixels (9) by a predetermined value s (e.g., 255) for determining a maximum value of the high gray level. Further, in step S15, the second pixel element value is calculated by multiplying a ratio r2 obtained from a sum of the pixel values of all (25-of) the pixels within the second image region divided by the maximum value (i.e., M-1) among the pixel values of the M values×the number of pixels (25) by the predetermined value s (e.g., 255) for determining the maximum value of the high gray level. A ratio r (normalized from the ratio r1 and the ratio r2) is calculated by, for example, using Equation 4 below.

$$r=(\Sigma v)/((M-1)\times w)\ldots(\text{Equation 4})$$

Here, $\Sigma v$ is a sum of the pixel values of all the pixels within the image regions, and w is the number of pixels within the image regions. M is a number of gray levels in the printing image (the M-valued image), and is 4 in case of a 4-valued image, for example.

By using the multi-valued image generating process, the image forming device 10 in Embodiment 4 can properly convert the acquired M-valued image into the N-valued image with higher gray level without acquiring related information for generating the M-valued image as the printing image by the image acquisition part 110. Therefore, the external information processing device 80 (PC, etc.) can convert the image with the high gray level (256 gray levels) in the image with the low gray level (e.g., 4 gray levels) to be used as the printing image and transmitted to the image forming device 10, for example. In this way, the communication data amount from the external information device 80 (PC, etc.) to the image forming device 10 may be reduced. Accordingly, higher speed and reduction of network loadings may be accomplished until the printing is over.

Further, instead of the calculation shown by Equation 4, other calculations may also be adopted for reflecting the pixel value of the low gray level (e.g., 4 gray level) of each of the pixels within the image region and determining the ratio r to be greater than or equal to 0 and less than or equal to 1.

[Other embodiments]

In view of the foregoing, the image forming device according to the preferred embodiments of the invention have been described. However, the invention is not limited by the preferred embodiments.

For example, it is illustrated that the image forming device calculates the pixel value of multi values for each pixel in the binary image by using the multiple image regions having similar shapes but different sizes, such as the squares (the square matrix) used in Embodiment 1 and the circles used in Embodiment 2. Nonetheless, as long as the sizes are different from one another, the image regions may also use shapes other than rectangles and circles (e.g., symmetrical shapes on up, down, left and right sides, including and centering on the focused pixel, such as a cross shape).

In the example of FIG. 7 described above, the pixel value of each pixel in the multi-valued image is calculated by the first pixel element value and the second pixel element value, wherein the first pixel element value is two bits or more and is determined based on the pixel values of the pixels within the first image region in form of the 3x3 square matrix, and the second pixel element value is two bits or more and is determined based on the pixel values of the pixels within the second image region in form of the 5x5 square matrix. Among them, the first image region in form of the 3x3 square matrix includes multiple pixels adjacent to the specific pixel and the specific pixel in the binary image, and the second image region in form of the 5x5 square matrix includes multiple pixels adjacent to the first image region and all the pixels within the first image region. Nonetheless, the first image region and the second image region in arbitrary shape may also be adopted with the pixel value of each pixel in the multi-valued image calculated as follows. For example, in the binary image, a region in arbitrary shape including the first pixels adjacent to the specific pixel and the specific pixel is used as the first image region, and a region in arbitrary shape including the second pixels adjacent to the first image region and all the pixels within the first image region is used as the second image region. Each pixel value of each pixel of the multi-valued image can then be calculated according to the first pixel element value and the second pixel element value, wherein the first pixel element value is two bits or more and is determined based on the pixel values of all the pixels (or multiple pixels) within the first image region, and the second pixel element value is two bits or more and is s determined based on the pixel values of all the pixels (or multiple pixels) within the second image region. In this calculation, for example, the first pixel element value may also be determined based on a ratio of the pixels having the pixel value being the predetermined value to all the pixels (or multiple pixels) within the first image region, and the second pixel element value may also be determined based on a ratio of the pixel values having the pixel value being the predetermined value to all the pixels (or multiple pixels) within the second image region.

Further, in order to obtain a multi-valued pixel value (i.e., the pixel value represented by one of three or more values) of the pixel X focused in the binary image, it is illustrated that the number of the image regions used is two in Embodiment 1 and three in Embodiment 2, but the number of the image regions may also be four or more. Also, the pixel value of the focused pixel X of multi values is estimated through the linear sum (the linear combination) of the calculated pixel element values from each of used image regions. Yet, the coefficients of each term of the linear sum (referring to Equation 2 and Equation 3) may be the same value or values different from one another, and each of the coefficients may be determined by various approaches. Further, in the calculation of reflecting the calculated pixel element values from each of the image regions into the result, the pixel value of the pixel X of multi values may also be obtained by using calculations other than the linear sum.

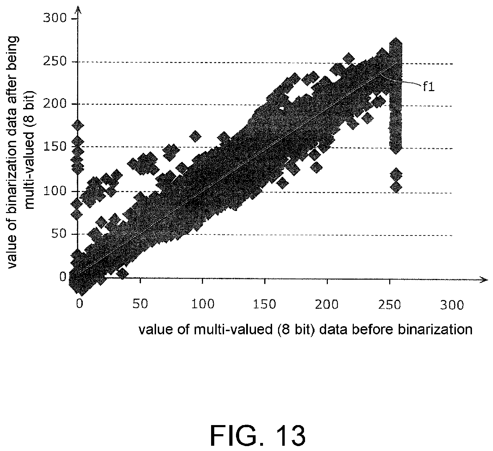

In the foregoing embodiments, the three image regions with different sizes (3x3, 5x5 and 7x7) are used to obtain the multi-valued pixel values from binary image, besides an image region of 9x9 can be further used for improving a reproducibility for the multi-valued image. However, increasing number of the image regions may lead to sacrifice on a universality (for providing the reproducibility with respect to the binary image of any kind). It is useful to balance the reproducibility and the universality when considering the number of image regions. The reproducibility for changing the binary image into the multi-valued image by the image forming device is described below with reference to FIG. 13. FIG. 13 is a graph plotting values of data (indicated by black diamonds in the drawing) with a horizontal axis and a vertical axis as described below. The multi-value (8bit) data related to an original multi-valued image, which has not been binarized into the binary image to be inputted to the image forming device in the foregoing embodiments, is shown on the horizontal axis. The multi-valued (8 bit) data related to the multi-valued image generated by the image forming device in the image forming device in the foregoing embodiments based on the inputted binary image is shown on the vertical axis. The values of those data illustrate a correlation substantially along a straight line f1 with a multiple correlation coefficient calculated as 0.9609. If each pixel value of the original multi-valued image before been binarized into binary image is completely identical the each pixel value of the multi-valued image generated by the image forming device based on the binary image, the multiple correlation coefficient is 1.0. In general, two are determined to be correlated with each other when the correlation coefficient is 0.7 or more. Therefore, with the process of generating the multi-valued image used by the image forming device according to the foregoing embodiments, the reproducibility of the original data can be considerably high.

Further, if the size of the image region is an even number, the focused pixel X in the binary image does not have to be at the center of the image region. However, to perform the multi-valued process more properly, it is more effective to use the image region centering the focused pixel X (e.g., the image region in which multiple pixels are arranged in a square matrix having P rows and P columns (P is an odd number greater than or equal to three) and centering on the pixel X).

Further, the multi-valued image does not have to be the image of 256 gray levels so long as it is the image having the pixel value of each of the pixel represented by one of three or more values.

Moreover, in Embodiment 1, the image region is described using the square matrix with a row direction as the horizontal direction of the image and a column direction as the vertical direction, for example. Nonetheless, the invention is not limited thereto. For example, the row direction may be determined as 45 degrees to the horizontal direction and the column direction may be determined as 135 degrees to the horizontal direction.

Further, in the foregoing embodiment, the multi-valued image generating process is illustrated to include: focusing on each of the pixels of the binary image one by one, calculating the pixel element value of the focused pixel by using the two image regions each time, and estimating the pixel value of multi values related to the focused pixel (FIG. 4). However, a sequence of the multi-valued image generating process is not limited to the above, the sequence may be changed or a part of the sequence may be omitted without changing the spirit in the scope of the subject matters in the invention. For example, one pixel element value of multi values related to each pixel may be calculated by temporarily focusing on each pixel of the binary image one by one with use of one image region. Next, another pixel element value of multi values related to each pixel may be calculated by focusing on each pixel of the binary image one by one with use of another image region. Then, the two calculated pixel element values of multi values related to each of the pixels are placed into Equation 2 so the pixel value of multi values related to each of the pixels may be estimated accordingly. Further, the sequence of the multi-valued image generating process may all or partially be realized by using hardware such as a dedicated IC, or using software.

Moreover, in addition to MFP and printers, the image forming device may also be photocopiers capable of inputting the binary image.

Further, all or a part of the image forming device may be configured as a computer system having microprocessor, ROM, RAM, hard disk driver, display unit, keyboard, mouse, etc. A computer program is stored in RAM or hard disk driver. Microprocessor operates according to the computer program so the image forming device can achieve aforementioned functions. Here, in order to achieve the functions, the computer program is composed of a combination of a plurality of command codes for commanding computer.

Moreover, a part or all of components for constituting the image forming device may include one system LSI (Large Scale Integration).

The system LSI is a multi-functional LSI manufactured by integrating multiple components on one chip, and more specifically, is a computer system including microprocessor, ROM, RAM, etc. A computer program is stored in RAM. The microprocessor operates according to the computer program so the system LSI can achieve said functions.

Further, after the system LSI is manufactured, such integrated circuit can use Field Programmable Gate Array (FPGA), which is programmable.

In addition, a part of or all of components for constituting the image forming device may also include IC card or single module detachable on each device. The IC card or the module may be a computer system including microprocessor, RAM, ROM, etc. The IC card or the module may also include the multi-functional LSI. The microprocessor operates according to a computer program so said IC card or module can achieve said functions. The IC card or the module may also include a tamper resistant.

In addition, a part of or all of components for constituting the image forming device may also be disposed on an information processing device (e.g., the external information processing device 80) outside the image forming device. For example, the external information processing device 80 such as external portable terminals (e.g., smart phones) or PC includes a memory, a communication circuit and a processor, which can function as the image acquisition part 110, the multi-valued image generation part 120, the image processing part 130, the image forming part 140 and the parameter storage part 150 shown in FIG. 2. In this case, as similar to the image forming device, the external information processing device 80 can convert the printing image of the binary image or the M-valued image (e.g., the image generated by applications in smart phones) into the multi-valued image of N values which has more values (having three or more than three values or having M or more than M values) than the former. Then, the external information processing device 80 can transmit the converted multi-valued image to, for example, the image forming device for printing. Further, the invention may also be a method for executing aforesaid steps (sequence). Further, the invention may be a computer program used by a computer for realizing the methods or even a digital signal including the computer program.

Furthermore, the invention may also be things recorded on a non-temporary recording medium where the computer reads the computer program or the digital signal. The non-temporary recording medium includes, for example, floppy disk, hard disk drive, CD-ROM, magnetic optical (MO) disk, digital versatile disk (DVD), digital versatile disk read only memory (DVD-ROM), (digital versatile disk random access memory (DVD-RAM), Blu-ray™ Disc (BD), semiconductor memory or the like. Further, the invention may also be digital signal recorded in aforesaid non-temporary recording mediums.

Further, the computer program or the digital signal in the invention may also be transmitted via electric communication lines, wireless or wired communication lines, networks (e.g., the Internet), data broadcasting, etc.

Further, the invention may be a computer system including a microprocessor and a memory, in which the memory stores the computer program and the microprocessor can also operate according to the computer program.

Further, said program or the digital signal may be recorded in the non-temporary recording mediums for transmission, or said program or the digital signal may be transmitted via the network and then is executed by the other independent computer system.

Also, the invention may also be implemented by combining use of the foregoing embodiments and the modification examples.

The invention may be applied in the image forming device such as MFP, printers, etc.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

Reference Numerals

| | |
|---|---|
| 10: | image forming device |
| 11: | paper-feeding part |
| 12: | transport part |
| 13: | paper-ejecting part |
| 14: | transfer part |
| 15: | fixing part |
| 80: | external information processing device |
| 81, 101: | control part |
| 82, | 103: communication part |
| 90: | original image |
| 91: | binary image |
| 92: | multi-valued image |
| 102: | storage part |
| 102a: | non-volatile storage part |
| 102b: | volatile storage part |
| 103: | communication part |
| 104: | user interface |
| 110: | image acquisition part(acquisition part) |
| 120: | multi-valued image generation part(generation part) |
| 121a, 121b: | image region size setting part |
| 122a: | first pixel element value calculating part |
| 122b: | second pixel element value calculating part |
| 123: | multi-valued pixel value calculating part |
| 130: | image processing part |
| 140: | image forming part |
| 150: | parameter storage part |

**Claims**

1. An image forming device (10), comprising:

   an acquisition part (110), acquiring a binary image; and
   a generation part (120), generating a multi-valued image including a specific pixel based on pixel values of pixels of the binary image within a first image region with a first size including the specific pixel and pixel values of pixels of the binary image within a second image region with a second size different from the first size including the specific pixel.

2. The image forming device (10) according to claim 1, wherein
   the generation part (120) generates the multi-valued image including the specific pixel according to a first pixel element value based on the pixel values of each of the pixels within the first image region and a second pixel element value based on the pixel values of each of the pixels within the second image region.

3. The image forming device (10) according to claim 1 or 2, wherein
   the first image region and the second image region are similar shapes.

4. The image forming device (10) according to any one of claims 1 to 3, wherein
   the first image region comprises a plurality of pixels in a square matrix having P rows and P columns and centering on the specific pixel in the binary image, wherein P is an odd number greater than or equal to three, and
   the second image region comprises a plurality of pixels in a square matrix having Q rows and Q columns and centering on the specific pixel in the binary image, wherein Q is an odd number greater than or equal to three and different from P.

5. The image forming device (10) according to any one of claims 1 to 4, wherein
   the first image region and the second image region are regions centering on the specific pixel and symmetrical on up and down, left and right sides.

6. The image forming device (10) according to claim 2, wherein
   The generation part (120) determines the pixel values of the specific pixel based on a linear sum of the first pixel element value and the second pixel element value.

7. The image forming device (10) according to claim 2 or 6, wherein
   the first pixel element value reflects a ratio of the pixels having a pixel value to all the pixels within the first image region, and the second pixel element value reflects a ratio of the pixels having a pixel value to all the pixels within the second image region.

8. The image forming device (10) according to claim 2 or 6 or 7, wherein
   the first pixel element value reflects a product of the ratio of the first image region and a predetermined value, and
   the second pixel element value reflects a product of the ratio of the second image region and the predetermined value.

9. The image forming device (10) according to any one of claims 2 and 6 to 8, wherein
   the generation part (120) determines the pixel values of the specific pixel based on a linear combination of the first pixel element value, the second pixel element value and predetermined parameters.

10. The image forming device (10) according to claim 9, wherein
    the determined parameters comprise a coefficient for the first pixel element value of the first image region and a coefficient for the second pixel element value within the second image region, and each of the coefficients is determined by taking a smaller value when the size of the image region corresponding to the coefficient is greater.

11. The image forming device (10) according to any one of claims 6 to 10, wherein
    the generation part (120) determines the pixel values of the specific pixel based on an average value of the first pixel element value and the second pixel element value.

12. An image forming device (10), comprising:

    an acquisition part (110), acquiring an M-valued image, wherein M is a natural number greater than or equal to two, and each pixel value of each pixel in the M-valued image is represented by one of M values; and
a generation part (120), generating an N-valued image including a specific pixel based on the pixel values of the pixels of the M-valued image within a first image region with a first size including the specific pixel and the pixel values of the pixels of the M-valued image within a second image region with a second size different from the first size including the specific pixel, and representing the specific pixel by one of N values, wherein N is a natural number greater than M.

13. The image forming device (10) according to claim 12, wherein
each of the pixel values of each of the pixels in the M-valued image is represented by one of M different numbers, and each of the pixel value of each of the pixels in the N-valued image is represented by one of N different numbers.

14. The image forming device (10) according to claim 12 or 13, wherein
the pixel value of the specific pixel is a multi-valued pixel value represented by one of multiple numbers greater than or equal to N, and the pixel value reflects a first pixel element value based on the pixel values of each of the pixels within the first image region and a second pixel element value based on the pixel values of each of the pixels within the second image region.

15. The image forming device (10) according to any one of claims 12 to 14, wherein
numbers of the pixels included in the first image region and the second image region are different.

FIG. 1

FIG. 2

FIG. 3

```
                    ┌─────────────────────────┐
                    │    Multi-valued image   │
                    │    generating process   │
                    └─────────────────────────┘
                                 │                          ┌─S11
    ┌──────────────────────────┐ ▼
    │  ┌──────────────────────────────────────────────────────┐
    │  │ Focusing on one pixel not yet focused in the binary image │
    │  └──────────────────────────────────────────────────────┘
    │                            │                          ┌─S12
    │                            ▼
    │  ┌──────────────────────────────────────────────────────┐
    │  │ Extracting each pixel value in a first image region in form of a │
    │  │ square matrix of 3x3 centering on the focused pixel (a pixel X) │
    │  └──────────────────────────────────────────────────────┘
    │                            │                          ┌─S13
    │                            ▼
    │  ┌──────────────────────────────────────────────────────┐
    │  │ Calculating a first pixel element value related to the pixel │
    │  │          X based on each extracted pixel value          │
    │  └──────────────────────────────────────────────────────┘
    │                            │                          ┌─S14
    │                            ▼
    │  ┌──────────────────────────────────────────────────────┐
    │  │ Extracting each pixel value in a second image region in form │
    │  │   of a square matrix of 5x5 centering on the focused pixel │
    │  └──────────────────────────────────────────────────────┘
    │                            │                          ┌─S15
    │                            ▼
    │  ┌──────────────────────────────────────────────────────┐
    │  │ Calculating a second pixel element value related to the pixel │
    │  │          X based on each extracted pixel value          │
    │  └──────────────────────────────────────────────────────┘
    │                            │                          ┌─S16
    │                            ▼
    │  ┌──────────────────────────────────────────────────────┐
    │  │ Estimating a pixel value of the pixel X represented by three or │
    │  │ more values by using a predetermined calculation based on the │
    │  │ first pixel element value and the second pixel element value │
    │  └──────────────────────────────────────────────────────┘
    │                            │                          ┌─S17
    │           Yes              ▼
    └──────────────────◇ Does the pixel not yet ◇
                        ╲  focused still exist? ╱
                                 │ No                       ┌─S18
                                 ▼
                    ┌──────────────────────────────────────────────┐
                    │ Genrating a multi-valued image including a pixel goup │
                    │         having the estimated pixel values          │
                    └──────────────────────────────────────────────┘
                                 │
                                 ▼
                    ┌─────────────────────────┐
                    │ Multi-valued image generating │
                    │    process is completed    │
                    └─────────────────────────┘
```

# FIG. 4

Binary image (two gray levels in back and white)

|     | i-5 | i-4 | i-3 | i-2 | i-1 | i | i+1 | i+2 | i+3 | i+4 | i+5 | i+6 |
|-----|-----|-----|-----|-----|-----|---|-----|-----|-----|-----|-----|-----|
| j-3 | 0 | 0 | 0 | 1 | 0 | 1 | 0 | 1 | 0 | 1 | 0 | 1 |
| j-2 | 1 | 0 | 0 | 0 | 0 | 1 | 0 | 1 | 0 | 1 | 0 | 1 |
| j-1 | 0 | 1 | 0 | 1 | 0 | 1 | 0 | Focused pixel X | 0 | 0 |
| j | 0 | 0 | 0 | 0 | 0 | 0 | 0 | 1 | 0 | 1 | 0 | 0 |
| j+1 | 0 | 0 | 0 | 1 | 0 | 1 | 0 | 1 | 0 | 1 | 0 | 1 |
| j+2 | 1 | 0 | 0 | 0 | 0 | 0 | 1 | 0 | 1 | 1 | 0 | 1 |
| j+3 | 1 | 0 | 1 | 0 | 1 | 0 | 0 | 1 | 0 | 1 | 1 | 0 |

|     | i-1 | i | i+1 |
|-----|-----|---|-----|
| j-1 | 0 | 1 | 0 |
| j | 0 | 0 | 0 |
| j+1 | 0 | 1 | 0 |

First image region (3x3)

# FIG. 5

Binary image (two gray levels in back and white)

|     | i-5 | i-4 | i-3 | i-2 | i-1 | i | i+1 | i+2 | i+3 | i+4 | i+5 | i+6 |
|-----|-----|-----|-----|-----|-----|---|-----|-----|-----|-----|-----|-----|
| j-3 | 0 | 0 | 0 | 1 | 0 | 1 | 0 | 1 | 0 | 1 | 0 | 1 |
| j-2 | 1 | 0 | 0 | 0 | 0 | 1 | 0 | 1 | 0 | 1 | 0 | 1 |
| j-1 | 0 | 1 | 0 | 1 | 0 | 1 | 0 | Focused pixel X | 0 | 0 |
| j | 0 | 0 | 0 | 0 | 0 | 0 | 0 | 1 | 0 | 1 | 0 | 0 |
| j+1 | 0 | 0 | 0 | 1 | 0 | 1 | 0 | 1 | 0 | 1 | 0 | 1 |
| j+2 | 1 | 0 | 0 | 0 | 0 | 0 | 1 | 0 | 1 | 1 | 0 | 1 |
| j+3 | 1 | 0 | 1 | 0 | 1 | 0 | 0 | 1 | 0 | 1 | 1 | 0 |

|     | i-2 | i-1 | i | i+1 | i+2 |
|-----|-----|-----|---|-----|-----|
| j-2 | 0 | 0 | 1 | 0 | 1 |
| j-1 | 1 | 0 | 1 | 0 | 1 |
| j | 0 | 0 | 0 | 0 | 1 |
| j+1 | 1 | 0 | 1 | 0 | 1 |
| j+2 | 0 | 0 | 0 | 1 | 0 |

Second image region (5x5)

# FIG. 6

First image element value calculated
from first image region (3x3)

Multi-valued image

Pixel value =

0.5 x 57

+ 0.5 x 102

Second pixel element value calculated from second image region (5x5)

## FIG. 7

90

Original image
(multi-valued
image)

91

Printing image
(binary image)

92

Multi-valued
image

## FIG. 8

Multi-valued image
generating process

S21

Focusing on one pixel not yet focused in the binary image

S22

Extracting each pixel value in a circular image region centering
on the focused pixel (a pixel X) and having a size of 5

S23

Caclualting a first pixel element value related to the pixel
X based on each extracted pixel value

S24

Extracting each pixel value in a circular image region centering
on the pixel X and having a size of 13

S25

Calculating a second pixel element value related to the pixel
X based on each of extracted pixel value

S26

Extracting each pixel value in a circular image region centering
on the pixel X and having a size of 21

S27

Calculating a third pixel element value related to the pixel
X based on each extracted pixel value

S28

Estimating a pixel value of the pixel X represented by multi
values by using a linear sum of the first pixel element value, the
second pixel element value and the third pixel element value

S29

Yes    Does the pixel
not yet focused still
exist?

No    S30

Genrating a multi-valued image including a pixel goup having
the estimated pixel values

Multi-valued image generating
process is completed

# FIG. 9

i-1   i   i+1

j-1       1          Circular image region
                     (size: 5)
j    0   0   0

j+1       1
# FIG. 10

22

i-2  i-1   i   i+1  i+2

j-2                    1

j-1              0     1     0

j          0     0     0     0     1

j+1              0     1     0

j+2                    0

Circular image region
(size: 13)

# FIG. 11

i-2  i-1   i   i+1  i+2

j-2              0     1     0

j-1        1     0     1     0     1

j          0     0     0     0     1

j+1        1     0     1     0     1

j+2              0     1

Circular image region
(size: 21)

# FIG. 12

FIG. 13

Europäisches
Patentamt

European
Patent Office

Office européen
des brevets

## EUROPEAN SEARCH REPORT

Application Number

EP 17 15 2990

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/021792 A1 (SHIN SANG-YOUN [KR]) 22 January 2009 (2009-01-22) | 1-11 | INV. H04N1/40 |
| A | * paragraph [0047] - paragraph [0061]; figures 3-9 * | 12-15 | |
| X | EP 1 379 074 A2 (XEROX CORP [US]) 7 January 2004 (2004-01-07) * paragraph [0046] - paragraph [0058]; figure 2 * * paragraph [0113] - paragraph [0125] * | 1-15 | |
| A | US 2008/117465 A1 (CHUNG WOO-JUN [KR] ET AL) 22 May 2008 (2008-05-22) * paragraph [0100] - paragraph [0107]; figures 14, 15 * | 1-15 | |
| T | LI-MING CHEN ET AL: "Inverse halftoning for monochrome pictures", PROCEEDINGS OF THE INTERNATIONAL CONFERENCE ON IMAGE PROCESSING (ICIP) AUSTIN, NOV. 13 - 16, 1; [PROCEEDINGS OF THE INTERNATIONAL CONFERENCE ON IMAGE PROCESSING (ICIP)], LOS ALAMITOS, IEEE COMP. SOC. PRESS, US, vol. 2, 13 November 1994 (1994-11-13), pages 1022-1026, XP010146099, DOI: 10.1109/ICIP.1994.413510 ISBN: 978-0-8186-6952-1 * the whole document * | | |

TECHNICAL FIELDS
SEARCHED      (IPC)

H04N

The present search report has been drawn up for all claims

| Place of search | Date of completion of the search | Examiner |
|---|---|---|
| Munich | 16 June 2017 | Bakstein, Hynek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 15 2990

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2017

| Patent document cited in search report | | | Publication date | Patent family member(s) | | | Publication date |
|---|---|---|---|---|---|---|---|
| US 2009021792 | A1 | | 22-01-2009 | KR<br>US | 20090009087<br>2009021792 | A<br>A1 | 22-01-2009<br>22-01-2009 |
| EP 1379074 | A2 | | 07-01-2004 | BR<br>CA<br>EP<br>JP<br>US | 0302087<br>2433510<br>1379074<br>2004040790<br>2004001234 | A<br>A1<br>A2<br>A<br>A1 | 08-09-2004<br>01-01-2004<br>07-01-2004<br>05-02-2004<br>01-01-2004 |
| US 2008117465 | A1 | | 22-05-2008 | CN<br>EP<br>EP<br>KR<br>US | 101184146<br>2528315<br>2528316<br>20080044755<br>2008117465 | A<br>A2<br>A2<br>A<br>A1 | 21-05-2008<br>28-11-2012<br>28-11-2012<br>21-05-2008<br>22-05-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012105065 A